# DEMANDE DE BREVET EUROPEEN

(11) **EP 2 143 542 A1**
(43) Date de publication de la demande: **13.01.2010**
(21) Numéro de dépôt: 08159852.6
(22) Date de dépôt: 07.07.2008
(51) Int. Cl.: B29C 49/46, B65B 3/02, B29C 49/06, B29C 49/12, B29C 49/78

(54) **Procédé et dispositif de conditionnement d'un liquide alimentaire**

(71) Demandeur: Nestec S.A., 1800 Vevey (CH)
(72) Inventeur: Chauvin, Guillaume, 88410 Monthureux sur Saone (FR); Chimetto, Fabio, 35016 Piazzola sul Brenta (PD) (IT); Hartwig, Klaus, 54000 Nancy (FR)

(57) **Abrégé**

L'invention concerne un procédé de conditionnement d'un volume prédéterminé de liquide alimentaire dans un contenant en matériau thermoplastique constitué à partir d'une préforme chauffée positionnée dans un moule, caractérisé en ce que le procédé comprend une étape d'injection d'au moins du liquide alimentaire dans un évidement de la préforme en sorte de favoriser une expansion de la préforme à l'intérieur du moule, le moule définissant une forme du contenant, un volume de liquide alimentaire introduit au cours de l'étape d'injection étant au moins égal audit volume prédéterminé, et le procédé comprend de plus une étape d'aspiration d'une fraction dudit volume du liquide alimentaire introduit jusqu'à ce qu'un volume de liquide alimentaire restant dans le contenant soit sensiblement égal audit volume prédéterminé.

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET) contenant un liquide, de préférence de l'eau et notamment de l'eau minérale.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant. Au cours du procédé classique de fabrication du contenant à partir d'une préforme, les préformes sont enfilées sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport réalisé par un bras de transfert par exemple, est coordonné avec celui de la machine de soufflage qui est généralement réalisée sous la forme d'un carrousel rotatif tournant de manière continue autour de son axe vertical et qui porte, à sa périphérie, une série de moules identiques. Ainsi, la préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse (environ 100°C) afin de permettre la mise en forme par soufflage-étirage. La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu du soufflage. Grâce à la présence simultanée de plusieurs moules, une telle machine de soufflage permet de produire des contenants à des cadences très élevées, de l'ordre de 1000 à 2000 bouteilles par heure et par moule soit de l'ordre de plusieurs dizaines de milliers d'unités à l'heure.

Le soufflage-étirage se fait par étirage à l'aide d'une tige métallique, une injection d'air se faisant à des pressions variant de 3 à 40 (3.10⁵ Pa à 4.10⁶ Pa). L'air est injecté à travers une buse dont l'extrémité est introduite à travers l'ouverture de la tête de la préforme.

De manière générale, les pressions ensuite imposées au liquide alimentaire injecté sont élevées, puisque le processus industriel nécessite des cadences élevées. Il est de pratique usuelle que le volume de liquide alimentaire introduit dans les contenants soit supérieur à la valeur affichée pour le contenant, dans la mesure où il est possible de finaliser des contenants avec un volume supérieur au volume annoncé, alors que l'inverse n'est pas possible.

Néanmoins, une telle situation n'est guère satisfaisante car elle a pour conséquence une perte de produit alimentaire pour le fabricant, ainsi qu'un manque de précision dans l'adéquation entre la valeur de volume contenu et la réalité de ce volume, bouteille par bouteille.

Dans ce contexte, le problème technique que la présente invention résout est la mise en place d'un processus industriel permettant d'offrir la garantie du volume annoncé pour le type de conditionnement, de manière simple et économiquement acceptable.

La demanderesse propose à cette fin un procédé de conditionnement d'un volume prédéterminé d'un composant de liquide alimentaire dans un contenant en matériau thermoplastique constitué à partir d'une préforme chauffée sensiblement cylindrique (par exemple) et positionnée dans un moule, le procédé comprenant une étape d'injection d'au moins du composant de liquide alimentaire dans un évidement de la préforme en sorte de favoriser une expansion de la préforme à l'intérieur du moule, le moule définissant une forme du contenant, un volume de composant de liquide alimentaire introduit au cours de l'étape d'injection étant au moins égal audit volume prédéterminé, et le procédé comprend de plus une étape d'aspiration d'une fraction dudit volume de composant de liquide alimentaire introduit jusqu'à ce qu'un volume de composant de liquide alimentaire restant dans le contenant soit sensiblement égal audit volume prédéterminé.

Le procédé ainsi défini permet de garantir le volume prévu pour le type de contenant défini par le moule, dans le cadre d'un procédé industriel intégré.

L'étape d'aspiration est préférentiellement mise en oeuvre à l'aide d'une pompe d'aspiration et d'un capteur volumétrique. L'étape d'injection est quant à elle préférentiellement mise en oeuvre à l'aide d'un vérin de mise en pression et d'un capteur volumétrique.

Préférentiellement l'étape d'injection comprend une sous-étape d'étirement longitudinal de la préforme par une canne d'étirement, ladite canne d'étirement étant creuse, et l'étape d'aspiration inclut une aspiration de liquide alimentaire par ladite canne d'étirement creuse.

Cela présente l'avantage que le procédé est mis en oeuvre de façon intégrée.

Avantageusement le procédé comprend une étape de recirculation d'au moins une partie du liquide alimentaire aspiré lors de l'étape d'aspiration.

La recirculation peut être faite dans le circuit d'injection, ce qui permet de minimiser les pertes de liquide alimentaire.

Il est également prévu, selon un mode de réalisation que l'étape d'aspiration comprend une aspiration à l'aide d'une pompe à vide.

Avantageusement, l'étape d'injection comprend une sous-étape d'injection d'au moins du liquide alimentaire par une canne d'étirage creuse adaptée à étirer une préforme de matériau thermoplastique et reliée à une arrivée de liquide alimentaire.

Selon une caractéristique préférée, la même canne d'étirement sert pour l'injection de liquide alimentaire et pour l'aspiration d'une fraction dudit volume de liquide alimentaire.

Selon une caractéristique qui peut être combinée avec les précédentes, la canne d'étirage creuse a un profil adapté pour minimiser les turbulences dans le liquide alimentaire au cours de l'étape d'injection d'au moins du liquide alimentaire par une canne d'étirage creuse.

Ledit profil peut comprendre un profil interne, un profil externe ou une combinaison d'un profil interne et d'un profil externe. L'homme du métier appréciera que la caractéristique des surfaces est adaptée et évite la formation de turbulences.

Le liquide alimentaire est injecté à des débits de l'ordre de 500 mL en 0.2 s. Le profil adapté permet de minimiser les turbulences, ce qui permet d'obtenir un procédé plus stable, avec des fenêtres opérationnelles plus larges.

Préférentiellement, une injection est effectuée à l'aide d'une tête de remplissage en forme de cloche.

Cela permet de réduire les risques de rupture des cols de contenant en matériau thermoplastique, qui subissent des pressions élevées au cours de l'étape d'injection.

Selon un aspect avantageux, la canne d'étirage est conçue de telle sorte que son volume interne est optimisé pour que ladite fraction du volume du liquide alimentaire soit réduite.

Préférentiellement, la fraction du volume du liquide alimentaire est réduite au volume interne du goulot.

Selon un mode de réalisation, l'étape d'injection comprend une étape d'injection d'au moins du liquide alimentaire à travers l'intérieur de la canne d'étirage et à travers un orifice autour de la canne d'étirage.

En effet, il est également avantageux que l'étape d'injection comprenne une étape d'injection d'un premier composant du liquide alimentaire, et une étape d'injection d'un deuxième composant du liquide alimentaire. Dans ces circonstances présentant un avantage particulier sur le plan industriel, le liquide alimentaire peut n'être préparé de manière finale que dans la bouteille.

Tout particulièrement avantageux est la solution dans laquelle l'injection d'un premier composant du liquide alimentaire comprend une injection à travers l'intérieur de la canne d'étirage, et l'injection d'un deuxième composant du liquide alimentaire comprend une injection à travers un orifice autour de la canne d'étirage.

L'invention porte aussi sur un dispositif de conditionnement d'un volume prédéterminé de liquide alimentaire dans un contenant en matériau thermoplastique constitué à partir d'une préforme chauffée sensiblement cylindrique et positionnée dans un moule, **caractérisé en ce que** le dispositif comprend des moyens d'injection d'au moins du liquide alimentaire dans un évidement de la préforme en sorte de favoriser une expansion de la préforme à l'intérieur du moule, le moule définissant une forme du contenant, un volume de liquide alimentaire introduit au cours de l'étape d'injection étant au moins égal audit volume prédéterminé, et le dispositif comprenant de plus des moyens d'aspiration d'une fraction dudit volume du liquide alimentaire introduit jusqu'à ce qu'un volume de liquide alimentaire restant dans le contenant soit sensiblement égal audit volume prédéterminé.

Ce dispositif peut avantageusement comporter des moyens adaptés à mettre en oeuvre respectivement les étapes de procédé visées ci-dessus, prises séparément ou en combinaison.

L'invention va maintenant être décrite en détails, en référence aux figures annexées, relatives à des modes de réalisation donnés à titre d'exemple.

La figure 1 représente un schéma général d'une installation adaptée à fonctionner avec l'invention.

La figure 2 représente un aspect important de l'invention.

La figure 3 représente un embout de tuyère en forme de cloche utilisée dans le cadre de l'invention.

La figure 4 représente le suivi de la formation d'une bouteille d'eau minérale selon un exemple d'utilisation de l'invention.

Le mode de réalisation donné ici à titre d'exemple se rapporte à un procédé de fabrication de bouteilles d'eau minérale en PET à partir d'une préforme chauffée. La préforme se présente sous la forme d'un tube cylindrique fermé à son extrémité inférieure. La tête de la préforme ouverte correspond au col de la bouteille, qui est un goulot sur lequel on visse une capsule de fermeture.

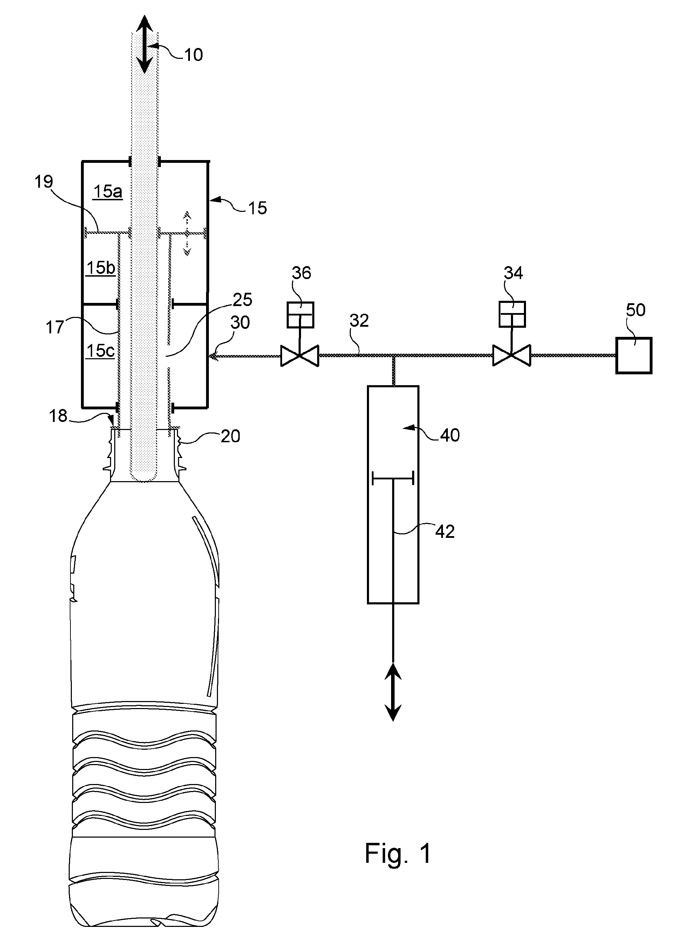

En référence à la figure 1, une canne d'étirage 10 est insérée dans un vérin 15 à air comprimé. La canne d'étirage 10 est généralement commandée par un vérin pneumatique associé à une came qui lui donne un mouvement longitudinal (représenté par une flèche). II est également possible d'utiliser un moteur d'étirage.

Le vérin 15 à air comprimé comprend un cylindre 17 commandant une tête d'injection 18, que traverse la canne d'étirage 10. La tête d'injection 18 est reliée au col 20 d'une préforme de PET, placée dans un moule (non représenté) et qui, après expansion, prend la forme d'une bouteille d'eau minérale, cette forme étant déterminée par la paroi du moule.

Le vérin comprend trois chambres, les deux chambres supérieures 15a et 15b étant remplies d'air comprimé. Entre ces deux chambres supérieures, une paroi de piston 19 coulisse dans une direction parallèle à la canne d'étirage (déplacement représenté par une flèche). Cette paroi 19 est traversée en son centre par la canne d'étirage 10.

Le vérin à air comprimé comprend également une entrée latérale 30 de liquide alimentaire, ici de l'eau minérale reliée à la troisième chambre 15c du vérin, qui est la chambre inférieure. Le liquide est amené par une canalisation 32.

Une arrivée externe d'eau minérale amène le liquide via l'extrémité distante de cette canalisation 32 à une première soupape 34 qui est reliée à l'ouverture d'un cylindre de remplissage 40 à chambre unique comprenant un piston 42 commandé par un moteur de remplissage (mouvement représenté par une flèche). Ce moteur donne au piston un mouvement longitudinal dans la chambre unique du cylindre de remplissage 40.

En série derrière la première soupape 34 et l'ouverture du cylindre de remplissage 40, sur la canalisation 32, se trouve une deuxième soupape 36. La canalisation 32 débouche ensuite dans la chambre inférieure 15c du vérin à air comprimé 15.

La chambre inférieure 15c du vérin à air comprimé est traversée par le cylindre de commande 17 de la tête de remplissage 18, dont le volume interne débouche à travers la sortie inférieure du vérin à air comprimé 15 dans la tête de remplissage 18. Le cylindre de commande comprend une ouverture latérale 25 permettant la circulation du liquide alimentaire entre la chambre inférieure du vérin et l'intérieur du cylindre de commande.

La canne d'étirage 10 traverse quant à elle le cylindre de commande 17 jusqu'à la tête de remplissage 18 et le goulot 20 de la préforme de bouteille.

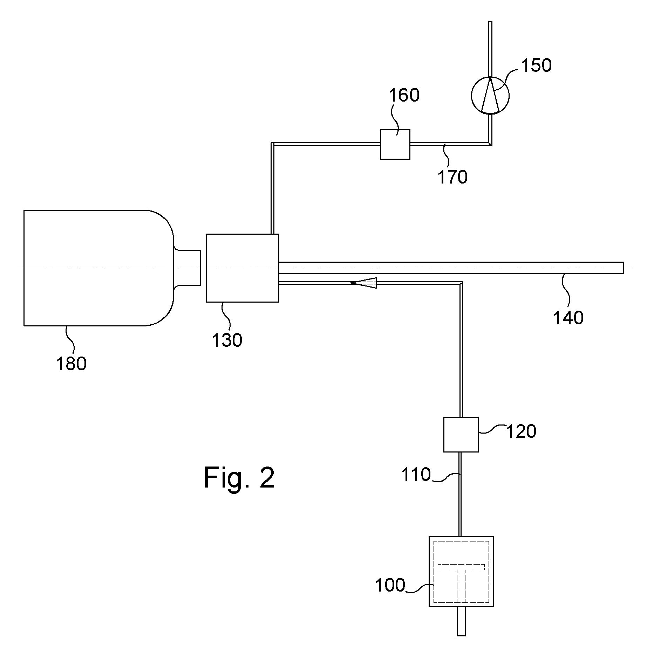

En référence à la figure 2, selon un mode de réalisation alternatif, un vérin 100 de mise sous pression augmente la pression du liquide alimentaire dans la canalisation 110 d'arrivée de liquide alimentaire. Un capteur volumétrique 120 permet de suivre le volume injecté à travers la canalisation 110. Le liquide alimentaire est introduit dans la tuyère 130.

La tige d'élongation 140 est introduite dans l'axe de la tuyère 130.

Une pompe d'aspiration 150 est fixée à une canalisation 170 reliée via un capteur volumétrique à la tuyère 130.

La tuyère 130 est positionnée en vis-à-vis du moule (non représenté) dans lequel est positionnée la préforme en PET qui fait l'objet d'une expansion et d'un remplissage par du liquide alimentaire, ici de l'eau minérale. A l'issue de la phase d'expansion, une bouteille 180 d'eau en PET est formée.

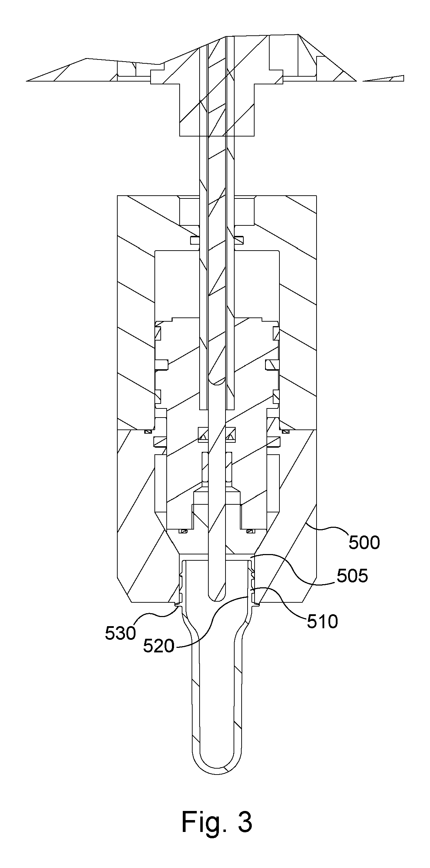

En référence à la figure 3, un embout de tuyère en forme de cloche 500 selon un mode de réalisation préféré est représenté. Les pressions interne et externe de part et d'autre de la circonférence du col de la préforme (c'est-à-dire sur les surfaces externes 510 du col, et sur les surfaces internes 520 du col) sont identiques, du fait de la présence d'un passage 505 reliant les volumes de part et d'autre de la circonférence, à l'intérieur de la tuyère. L'étanchéité du remplissage se fait à l'aide de la collerette 530 de la préforme. Grâce à ce dispositif, il n'y a pas de risque de déformation du col de la préforme au cours de l'injection d'un fluide sous pression par la tuyère.

Selon un autre mode de réalisation, un embout de tuyère maintient les surfaces externes 510 du col de la préforme de telle sorte que quand un fluide sous pression est injectée par le haut de la tuyère vers l'intérieur de l'évidement de la préforme, la pression exercée sur les parois internes 520 du col de la préforme par le fluide est compensée par le maintien apporté par les parois de l'embout de tuyère en forme de cloche. Le col de la préforme ne se déforme alors pas, malgré la pression élevée.

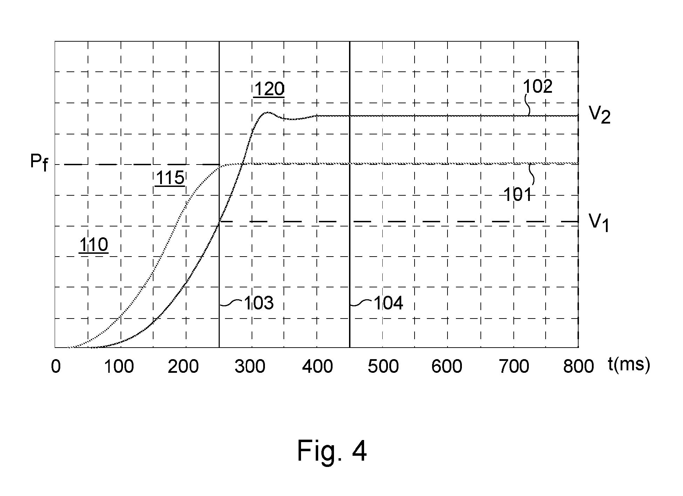

La figure 4 montre l'évolution au cours du temps de la position 101 de la canne d'étirage et la position 102 du vérin de remplissage commandant l'entrée de l'eau minérale dans la préforme en expansion.

L'axe des abscisses représente le temps. L'axe des ordonnées de gauche représente la position de la canne d'étirage, et l'axe des ordonnées de droite le volume d'eau introduit dans la préforme en expansion, qui est proportionnel à la position du vérin de remplissage.

Pendant une première partie du processus, de 0 à 250 ms, la canne d'étirage avance avec une vitesse essentiellement constante, selon un mode de réalisation préféré.

Néanmoins, selon un autre mode de réalisation, pendant une première 110 phase du processus, notamment de 0 à 150 ms, la canne d'étirage avance avec une vitesse qui croit, du fait d'une accélération positive. Pendant une deuxième phase 115 du processus, de 150 ms à 250 ms, la canne d'étirage avance avec une accélération négative et une vitesse qui décroit, jusqu'à devenir nulle à 250 ms. On comprend néanmoins que les changements de vitesse doivent être suffisamment doux pour assurer un étirage régulier et fiable du matériau thermoplastique.

250 ms après le début du processus (référence 103), la canne d'étirage a atteint sa position finale Pf, dont elle ne va plus bouger.

Au même instant, le vérin de remplissage a introduit un volume V1 d'eau minérale dans la préforme en expansion. Le volume introduit depuis le début du procédé (donc entre 0 ms et 250 ms) a augmenté progressivement, avec une augmentation progressive du débit (accélération du déplacement du vérin de remplissage).

Pendant les instants qui suivent qui constituent une troisième phase 120 du processus, jusqu'à 320 ms, l'augmentation du volume d'eau total introduit est constante, le débit étant invariable. Puis, le volume diminue subitement d'une petite fraction (de l'ordre de 4%) sur une période de 40 ms.

A partir de cet instant, le volume total introduit se stabilise autour de la valeur V2, qu'il atteint définitivement après quelques oscillations, le débit de liquide introduit étant nul.

Quelques instants plus tard, à partir de 450 ms après le début du procédé (référence 104), le vérin de remplissage a atteint une position finale dont il ne bouge plus. II a, à ce moment, introduit un volume d'eau minérale V2 dans la préforme en expansion. Le volume V2 est supérieur à V1, mais inférieur à 2 fois le volume V1.

Au cours du procédé d'utilisation du dispositif décrit, la température de la préforme est préalablement amenée à une valeur comprise entre 50°C et 130°C, voire entre 75°C et 100°C. Dans le mode préféré, cette valeur est de 95°C, le plastique utilisé étant du PET.

La canne a une vitesse comprise entre 0.5 et 3.0 m.s⁻¹, voire entre 1.0 et 2.5 m.s⁻¹. Dans le mode préféré, cette valeur est de 1.6 m.s⁻¹.

La température du liquide alimentaire est préalablement amenée à une valeur comprise entre 1 et 120°C, préférentiellement entre 10 et 90°C. Dans le mode préféré cette valeur est de 30°C.

Le rapport d'allongement longitudinal du matériau thermoplastique est compris entre 2 et 5, voire entre 2.5 et 4. Dans le mode préféré cette valeur est de 3.5.

Le rapport d'allongement radial du matériau thermoplastique est compris entre 2 et 7, voire entre 3 et 4.5. Dans le mode préféré cette valeur est de 4.

Le matériau thermoplastique est choisi dans le groupe constitué des polyethyleneterephtalates, des polypropylènes, des polyéthylènes, des polycarbonates, des polystyrènes, des acides polylactiques, des polychlorures de vinyle et de leurs combinaisons. Dans le mode préféré, il s'agit de PET.

La température du moule est inférieure d'au moins 50°C à la température de fusion du matériau thermoplastique, qui est dans le cas du PET de 230°C. De préférence, elle est maintenue en-dessous de 100°C. La température du moule est dans le mode préféré égale à la température ambiante.

Bien entendu l'invention n'est pas limitée aux modes de réalisation décrits et représentés par les dessins annexés et s'étend à toutes les variantes envisageables par l'homme du métier dans le cadre des revendications.

## Revendications

1. Procédé de conditionnement d'un volume prédéterminé d'un composant de liquide alimentaire dans un contenant en matériau thermoplastique constitué à partir d'une préforme chauffée positionnée dans un moule, **caractérisé en ce que** le procédé comprend une étape d'injection d'au moins un composant du liquide alimentaire dans un évidement de la préforme en sorte de favoriser une expansion de la préforme à l'intérieur du moule, le moule définissant une forme du contenant, un volume de composant du liquide alimentaire introduit au cours de l'étape d'injection étant au moins égal audit volume prédéterminé, et le procédé comprend de plus une étape d'aspiration d'une fraction dudit volume de composant du liquide alimentaire introduit jusqu'à ce qu'un volume de composant de liquide alimentaire restant dans le contenant soit sensiblement égal audit volume prédéterminé.

2. Procédé selon la revendication 1 **caractérisé en ce que** l'étape d'injection comprend une sous-étape d'étirement longitudinal de la préforme par une canne d'étirement, ladite canne d'étirement étant creuse, et l'étape d'aspiration inclut une aspiration de composant de liquide alimentaire par ladite canne d'étirement creuse.

3. Procédé selon la revendication 1 ou la revendication 2 **caractérisé en ce qu'**il comprend une étape de recirculation d'au moins une partie du composant du liquide alimentaire aspiré lors de l'étape d'aspiration.

4. Procédé selon l'une des revendications 1 à 3 **caractérisé en ce que** l'étape d'aspiration comprend une aspiration à l'aide d'une pompe à vide

5. Procédé selon l'une des revendications 1 à 4 **caractérisé en ce que** l'étape d'injection comprend une sous-étape d'injection d'au moins un composant du liquide alimentaire par une canne d'étirage creuse adaptée à étirer une préforme de matériau thermoplastique et reliée à une arrivée de liquide alimentaire.

6. Procédé selon la revendication 5 **caractérisé en ce que** la même canne d'étirement sert pour l'injection de composant de liquide alimentaire et pour l'aspiration d'une fraction dudit volume de composant de liquide alimentaire.

7. Procédé selon la revendication 6 **caractérisé en ce que** la canne d'étirage creuse a un profil adapté pour minimiser les turbulences dans un liquide au cours de l'étape d'injection d'au moins du composant de liquide alimentaire par une canne d'étirage creuse.

8. Procédé selon la revendication 7, **caractérisé en ce que** ledit profil comprend un profil interne.

9. Procédé selon la revendication 7 ou la revendication 8, **caractérisé en ce que** ledit profil comprend un profil externe.

10. Procédé selon l'une des revendications 1 à 9 **caractérisé en ce qu'**une injection est effectuée à l'aide d'une tête de remplissage en forme de cloche.

11. Procédé selon l'une des revendications 1 à 10 **caractérisé en ce que** la canne d'étirage est conçue de telle sorte que son volume interne est optimisé pour que ladite fraction de volume de composant du liquide alimentaire soit réduite.

12. Procédé selon la revendication 11, **caractérisé en ce que** ladite fraction du volume de composant de liquide alimentaire est réduite au volume interne du goulot.

13. Procédé selon l'une des revendications 1 à 12, **caractérisé en ce que** l'étape d'injection comprend une étape d'injection d'au moins un composant du liquide alimentaire à travers l'intérieur de la canne d'étirage et à travers un orifice autour de la canne d'étirage.

14. Procédé selon l'une des revendications 1 à 13, **caractérisé en ce que** l'étape d'injection comprend une étape d'injection d'un premier composant du liquide alimentaire, et une étape d'injection d'un deuxième composant du liquide alimentaire.

15. Procédé selon la revendication 14, **caractérisé en ce que** l'injection d'un premier composant du liquide alimentaire comprend une injection à travers l'intérieur de la canne d'étirage, et l'injection d'un deuxième composant du liquide alimentaire comprend une injection à travers un orifice autour de la canne d'étirage.

16. Dispositif de conditionnement d'un volume prédéterminé de composant de liquide alimentaire dans un contenant en matériau thermoplastique constitué à partir d'une préforme chauffée sensiblement cylindrique et positionnée dans un moule, **caractérisé en ce que** le dispositif comprend des moyens d'injection d'au moins un composant du liquide alimentaire dans un évidement de la préforme en sorte de favoriser une expansion de la préforme à l'intérieur du moule, le moule définissant une forme du contenant, un volume de liquide alimentaire introduit au cours de l'étape d'injection étant au moins égal audit volume prédéterminé, et le dispositif comprenant de plus des moyens d'aspiration d'une fraction dudit volume du liquide alimentaire introduit jusqu'à ce qu'un volume de composant de liquide alimentaire restant dans le contenant soit sensiblement égal audit volume prédéterminé.
